Europäisches Patentamt

European Patent Office

Office européen des brevets

(11) Publication number: **0 134 877**
**B1**

(12) **EUROPEAN PATENT SPECIFICATION**

(45) Date of publication of patent specification: 24.08.88

(21) Application number: **83850235.9**

(22) Date of filing: **02.09.83**

(51) Int. Cl.⁴: **B 62 D 27/06**

(54) A holder for a stanchion on a loadcarrying platform of a truck.

(43) Date of publication of application:
**27.03.85 Bulletin 85/13**

(45) Publication of the grant of the patent:
**24.08.88 Bulletin 88/34**

(84) Designated Contracting States:
**AT BE CH DE FR GB IT LI NL SE**

(56) References cited:
**DE-B-2 728 963**
**FR-A-2 429 128**

(73) Proprietor: **AB Kinnegrip**
**Box 683**
**S-531 16 Lidköping (SE)**

(72) Inventor: **Rosén, Göran**
**Radagatan 5**
**S-531 51 Lidköping (SE)**

(74) Representative: **Roth, Ernst Adolf Michael et al**
**GÖTEBORGS PATENTBYRA AB Box 5005**
**S-402 21 Göteborg (SE)**

EP 0 134 877 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### TECHNICAL FIELD

The present invention refers to a stanchion and a holder for it on a load-carrying platform of a truck, said holder comprising a mounting plate being provided with locking means intended to cooperate with at least one wedge-shaped locking member of the stanchion for locking the stanchion to the holder, said mounting plate at its lower end being designed with a rest for the lower end of the stanchion, so that the stanchion may be raised from a lowered position with its lower end being supported by said rest, said mounting plate further being provided with longitudinal side gables between which the lower part of the stanchion is intended to be received.

### BACKGROUND OF THE INVENTION

The connection of stanchions to the side edges of a load carrying platform of a truck has to be made by use of locking means arranged at the platform edge and extending into the stanchion and by means of a rest, which supports the stanchion and helps to guide the locking means into engagement with the stanchion. The holder also has to serve as a lateral guide for the stanchion for keeping it non-displaceably fixed in the lateral direction. Previously known holders of this kind have not fulfilled the demand of serving as a satisfactory lateral guidance for the stanchion.

The FR-A-2.429.128 discloses a holder qfor a stanchion of the above mentioned kind. The holder comprises a mounting plate with longitudinal side gables between which the stanchion is received. The mounting plate is further provided with a rest or the lower part of the stanchion.

The DE-B-2.728.963 discloses a stanchion and a holder for it of the kind in which the stanchion has to be lifted to a level above the holder and then be lowered and brought into engagement with the holder. The stanchion has at its lower end a V-shaped slot and the holder has a corresponding saddle-shaped portion intended to be received in said slot.

### THE OBJECT AND MOST IMPORTANT FEATURES OF THE INVENTION

The object of the present invention is to provide a holder for a stanchion, which is simple and cheap to manufacture and which provides a very good lateral guidance for the stanchion. This has according to the invention been achieved by the fact that that said lower part of the stanchion is laterally guided between said side gables and that said rest is provided with a pair of slots intended to receive a pair of lugs at the lower end of the stanchion and that between said slots there is provided a vertically arranged lip projecting from the mounting plate and intended to be received in a vertical slot at the lower end of the stanchion between said lugs, whereby, when mounted, the inner sides of said slot are parallel with each other above said rest and the width of said lip and said vertical slot are of corresponding sizes above said rest, so that said lip provides a lateral guide for the lower part of the stanchion.

### BRIEF DESCRIPTION OF THE DRAWINGS

The invention will now be described further by way of an example, with reference to the accompanying drawings. in which:

Fig. 1 is a perspective view of the holder according to the invention.

Fig. 2 is a plan view of the holder.

Fig. 3 is a section according to the line III-III in fig. 2.

Fig. 4 is a partly broken rear end view of the holder cooperation with the lower part of a stanchion.

Fig. 5 is a vertical section through the holder cooperating with the stanchion.

### DESCRIPTION OF A PREFERRED EMBODIMENT In the drawings the reference numeral 10 denotes a holder for a stanchion 11, the lower part of which is shown in fig. 4. The holder 10 is attached to the side edge profile of a load-carrying platform of a truck.

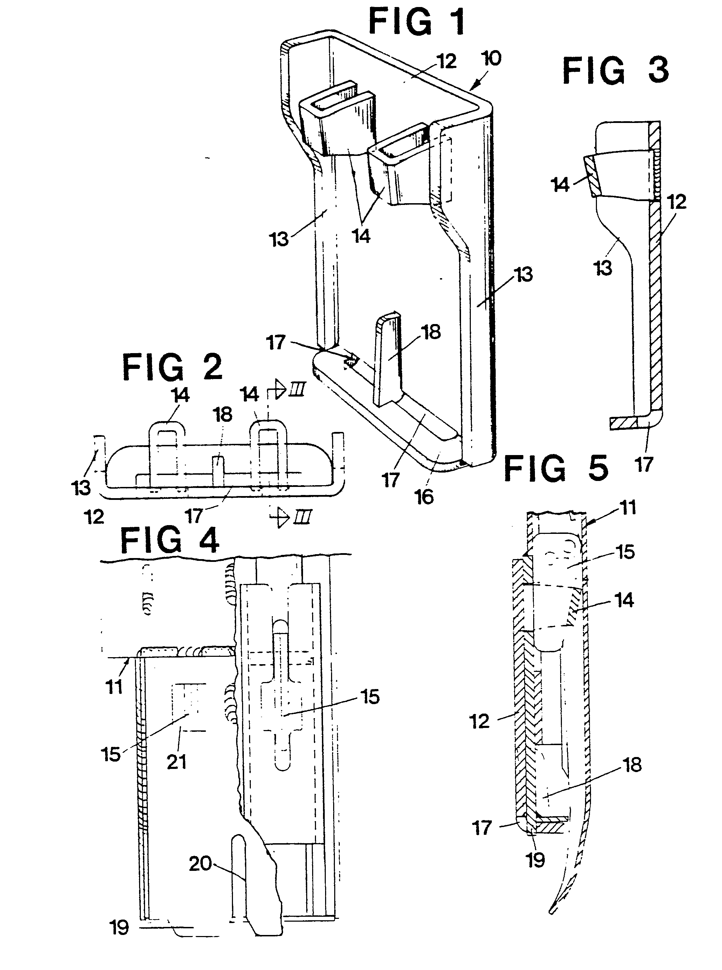

The holder 10 according to the figs. 1-3 comprises a mounting plate 12, which is provided with longitudinal side gables 13, the contours of which corresponding to that of the side edge profile of the platform. The holder 10 is intended to be welded in a space between two adjacent portions of the side edge profile. The distance between the side gables 13 substantially corresponds to the width of the lower part of the stanchion 11, so that this can be received and laterally guided therebetween.

At the upper portion of the mounting plate 12 a pair of wedge-shaped loops 14 are attached, which are intended to receive wedge-shaped locking members 15 from the stanchion 11 for locking this to the holder. At the lower part of the mounting plate 13 there is provided a rest 16 for the lower part of the stanchion 11. The rest 16 is provided with a slot 17, which is divided in two by a lip 18 attached to and projecting from the mounting plate 12. The two apertures of the slot 17 are intended to cooperate with a pair of lugs 19 at the lower end of the stanchion and the lip 18 is intended to be received in a slot 20 extending from the lower end of the stanchion 11 between the lugs 19. The stanchion 11 is further provided with a pair of openings 21 for receiving the locking loops 14 of the holder 10.

The invention is of course not limited to this embodiment but a plurality of modifications are possible within the scope of the claims.

### Claims

1. A stanchion and a holder for it on a load-carrying platform of a truck, said holder comprising a mounting plate (12) being provided with locking means (14) intended to cooperate with at least one wedge-shaped locking member of the stanchion for locking the stanchion (11) to the holder (10), said mounting plate at its lower end being designed with a rest (16) for the lower end of the stanchion, so that the stanchion may be raised from a lowered position with its lower end being supported by said rest (16), said mounting plate (12) further being provided with longitudinal side gables (13) between which the lower part of the stanchion is intended to be received, characterized in, that said lower part of the stanchion is laterally guided between said side gables (13) and that said rest (16) is provided with a pair of slots (17) intended to receive a pair of lugs (19) at the lower end of the stanchion and that between said slots (19) there is provided a vertically arranged lip (18) projecting from the mounting plate (12) and intended to be received in a vertical slot (20) at the lower end of the stanchion between said lugs (19), whereby, when mounted, the inner sides of said slot are parallel with each other above said rest and the width of said lip (18) and said vertical slot (20) are of corresponding sizes above said rest so that said lip provides a lateral guide for the lower part of the stanchion.

2. A device as claimed in claim 1, characterized in, that said mounting plate (12) is made from a single, work piece, the side gables (13) and the rest (16) constituting flanged portions of said work piece.

3. A device as claimed in claim 1 or 2, characterized in, that the pair of slots (17) provided in the rest (16) extend in the mounting plate (12) to a level above the upper surface of the rest (16).

**Patentansprüche**

1. Runge und Halter für die Runge an einer Ladefläche eines Last- oder Güterwagens, wobei der Halter eine Lagerplatte (12) mit Fixierorganen (14) aufweist, die mit wenigstens einem keilförmigen Fixierelement der Runge für deren Befestigung am Halter (10) zusammenwirken, wobei die Lagerplatte für das untere Ende der Runge an ihrem unteren Ende eine Auflage (16) hat, die so ausgebildet ist, daß die Runge aus ihrer abgesenkten Stellung, in der sich ihr unteres Ende an der Auflage (16) abstützt, angehoben werden kann, und wobei die Lagerplatte (12) ferner zwei in Längsrichtung verlaufende Seitenwände (13) hat, die zwischen sich das untere Ende der Runge aufnehmen können, dadurch gekennzeichnet, daß das untere Ende der Runge zwischen den beiden Seitenwänden (13) geführt ist, daß die Auflage (16) zwei Schlitze (17) hat, die zur Aufnahme von zwei Ansätzen (19) am unteren Ende der Runge dienen, und daß zwischen den Schlitzen (17) ein vertikal verlaufender Vorsprung (18) vorgesehen ist, der von der Lagerplatte (12) absteht und für den Eingriff in einen vertikalen SchlitZ (20) dient, der am unteren Ende der Runge zwischen den beiden Ansätzen (19) liegt, wobei im eingebauten Zustand die Innenränder des Schlitzes parallel zueinander über der Auflage liegen und die Breite des Vorsprungs (18) sowie des Schlitzes (20) über der Auflage einander so entsprechen, daß der Vorsprung eine Seitenführung für den unteren Teil der Runge bildet.

2. Vorrichtung nach Anspruch 1, dadurch gekennzeichnet, daß die Lagerplatte (12) einstückig ausgebildet ist, wobei die Seitenwände (13) und die Auflage (16) Flanschteile des einstückigen Werkstücks sind.

3. Vorrichtung nach Anspruch 1 oder 2, dadurch gekennzeichnet, daß sich die beiden in die Auflage (16) eingearbeiteten Schlitze (17) in der Lagerplatte (12) bis zu einer über der Oberseite der Auflage (16) liegenden Höhe erstrecken.

**Revendications**

1. Bride de ridelle et support pour cette dernière sur une plate-forme de chargement d'un camion, ledit support comportant une plaque de montage (12) munie de moyens de blocage (14) destinés à coopérer avec au moins un organe de blocage en forme de coin de la bride de ridelle (11) pour bloquer cette dernière sur le support (10), ladite plaque de montage comportant, au niveau de son extrémité inférieure, un appui (16) pour l'extrémité inférieure de la bride de ridelle, de sorte que cette dernière peut être soulevée à partir d'une position abaissée, dans laquelle son extrémité inférieure est soutenue par ledit appui (16), ladite plaque de montage (12) comportant en outre deux rebords latéraux longitudinaux (13) entre lesquels la partie inférieure de la bride de ridelle est destinée à être logée, caractérisée en ce que ladite partie inférieure de la bride de ridelle est guidée latéralement entre lesdits rebords latéraux (13) et que ledit appui (16) comporte un couple de fentes (17) destinées à recevoir un couple de pattes (19) prévues à l'extrémité inférieure de la bride de ridelle et qu'entre lesdites fentes (17) se trouve disposée une nervure verticale (18) qui fait saillie à partir de la plaque de montage (18) et est destinée à être reçue dans une fente verticale (20) prévue sur l'extrémité inférieure de la bride de ridelle entre lesdites pattes (19), ce qui a pour effet que, à l'état monté, les faces intérieures de ladite fente sont parallèles l'une à l'autre au-dessus dudit appui et que les largeurs de ladite nervure (18) et de ladite fente verticale (20) possèdent des dimensions correspondantes au-dessus dudit appui de sorte que ladite nervure forme un guide latéral pour la partie inférieure de la bride de ridelle.

2. Dispositif selon la revendication 1, caractérisé en ce que ladite plaque de montage (12) est réalisée sous la forme d'une pièce monobloc, les rebords latéraux (13) et l'appui (16) constituant des parties formant rebords de ladite pièce monobloc.

3. Dispositif selon la revendication 1 ou 2, caractérisé en ce que le couple de fentes (17) ménagées dans l'appui (16) s'étendent dans la plaque de montage (12) jusqu'à un niveau situé au-dessus de la surface supérieure de l'appui (16).

0 134 877

FIG 1

12
10
13
14
17
18
17
16

FIG 3

14
12
13
17

FIG 2

14
18
14
III
13
12
17
III

FIG 5

11
15
14
12
18
17
19

FIG 4

11
15
15
21
19
20

1